(19) Europäisches Patentamt

European Patent Office

Office européen des brevets

(11) **EP 1 215 551 B1**

(12) **EUROPEAN PATENT SPECIFICATION**

(45) Date of publication and mention
of the grant of the patent:
**09.08.2006 Bulletin 2006/32**

(51) Int Cl.:
*G05B 19/408* (2006.01)

(21) Application number: **00403492.2**

(22) Date of filing: **12.12.2000**

(54) **An autonomous system with heterogeneous bodies**

Selbsttätiges System mit heterogenen Körpern

Système autonome avec des corps hétérogènes

(84) Designated Contracting States:
**DE FR GB**

(43) Date of publication of application:
**19.06.2002 Bulletin 2002/25**

(73) Proprietor: **Sony France S.A.**
**92110 Clichy La Garenne (FR)**

(72) Inventors:
• **Kaplan Frédéric c/o Sony CSL-P**
**75005 Paris (FR)**
• **Oudeyer Pierre-Yves**
**75005 Paris (FR)**

(74) Representative: **Thévenet, Jean-Bruno et al**
**Cabinet Beau de Loménie**
**158, rue de l'Université**
**75340 Paris Cédex 07 (FR)**

(56) References cited:
**EP-A- 0 982 644**      **EP-A- 1 088 629**
**EP-A- 1 103 351**

• **PATENT ABSTRACTS OF JAPAN vol. 1997, no. 06, 30 June 1997 (1997-06-30) & JP 09 034698 A (HITACHI LTD), 7 February 1997 (1997-02-07)**
• **LUETH T C ET AL: "TASK DESCRIPTION, DECOMPOSITION, AND ALLOCATION IN A DISTRIBUTED AUTONOMOUS MULTI-AGENT ROBOT SYSTEM" , PROCEEDINGS OF THE INTERNATIONAL CONFERENCE ON INTELLIGENT ROBOTS AND SYSTEMS (IROS), US,NEW YORK, IEEE, PAGE(S) 1516-1523 XP000510598 ISBN: 0-7803-1934-6 * the whole document ***
• **FUJITA ET AL: "Reconfigurable physical agents" , AUTONOMOUS AGENTS 98 , MINNEAPOLIS USA XP002929016 * page 54 - page 61 ***

**Description**

BACKGROUND OF THE INVENTION

(1) Field of the invention

The present invention relates to an autonomous system having a software agent transferable into heterogeneous bodies, i.e. software agent which is able to move between bodies of different kinds.

(2) Technical background

In a previous European patent application EP-1103351 A1 relating to a "Robotic Teleportation Method and System", it has been shown that an autonomous robot can be decomposed into a software component in which adaptation and learning take place and a hardware component which remains the same. The hardware component may thus be constituted by a physical body. The above mentioned previous European patent application describes how a software agent can "teleport" by transferring itself between two physical bodies of the same kind. However, there exists some cases where it could be useful to transfer the software of a particular type of physical body, e.g. in an entertainment robot, into another type of body, e.g. a more simple body.

Indeed, if we consider the case of entertainment robots, a user may wish to share part of his daily life with the robot and engage in linguistic communication with the robot so that it learns about the world of its owners. But most of the time, it is not convenient for the master to take the robot with him, e.g. when traveling, in the subway,...The master could thus wish to maintain a long term relationship with an entertainment robot by letting the software agent of the robot move from one body to another body of a different kind.

The article by Fujita M et al , entitled "Reconfigurable physical agents" Autonomous agent 98, Minneapolis USA, pages 54-61, discloses configurable physical components used in the context of building robots and creating various robots, the reconfigurabilly allowing incremental replacement of components.

The article by Lueth T.C. et al, entided "Task description, decomposition, and allocation in a distributed autonomous multi-agent robot system ; proceedings of the intemational conference on intelligent robots and systems (IRAS), US, New York, IEEE, pages 1516-1523, disdoses a distributed control architecture for autonomous multi-robot systems, where there is a distributed execution of tasks or subtasks by components of the multi-robot system.

SUMMARY OF THE INVENTION

The present invention aims at enabling software agents to move between bodies of different kinds having different degrees of complexity or even different natures. These aims are obtained by an autonomous system comprising :

a) a plurality of bodies of different kinds, each body comprising

i) a body supporting structure having at least one sensor defining a sensory space, and
ii) a body interface constituted by a common body software interface to access information originating from the body supporting structure, and

b) at least a software agent comprising

i) a set of agent software elements and
ii) an agent interface constituted by a common agent software interface to convert sensor requests sent by the set of agent software elements into a format that can be understood by the body interface,

wherein said software agent constituting a software artificial mind is adapted to dock successively on different bodies to define with the successive bodies successive embodied agents, the software agent accessing information coming from the sensor implemented on the body supporting structure of a given body, via the body interface of said given body and the agent interface and the software agent including a specific layer of software enabling to find correspondences between values of information perceived by the software agent when embodied into different bodies.

At least one body may be a physical entity, such as a robot.
At least one body may be a physical entity such as a note book or laptop computer equipped with a video camera.
At least one body may be a software entity.
At least one body may be a software entity comprising a virtual character in a computer game.

At least one body may be a virtual robot park adapted to cooperate simultaneously with a plurality of software agents.

According to a particular aspect of the present invention, the specific layer of software of the software agent comprises means for using common labels (li1,li2) associated with values perceived by the software agent in sensory spaces (Si1,Si2) of different bodies.

More specifically, according to an embodiment of the present invention, the specific layer of software of the software agent cooperating successively with a first body and a second body comprises the following means :

i) means for storing a first knowledge (E1) acquired in the first body and comprising at least a first label (li1) associated with a first set of first prototype points (xi 1) of a first sensory space (S1) associated with the first body,

ii) means for storing a second knowledge (E2) acquired in the second body and comprising at least said first label (li1) associated with a first set of second prototype points (xi2) of a second sensory space (S2) associated with the second body,

iii) means for establishing a mapping $f$ and a reverse mapping $f^1$ relating the first and second sensory spaces (S1, S2), and

iv) means for using the reverse mapping $f^1$ for directly finding labels associated to further sets of second prototype points (yi2) in the second body from existing further sets of first prototype points (yi 1) in the first body.

## BRIEF DESCRIPTION OF THE DRAWINGS

Further features and advantages of the present invention will become apparent from the description below given in association with the accompanying drawings, in which :

Fig. 1 is a diagram illustrating the architecture of an embodied agent of an autonomous system according to the invention,

Fig. 2 is a diagram illustrating the architecture of an autonomous system according to the invention with a plurality of bodies of different kinds,

Fig. 3 is a diagram illustrating a first sensory space of a first body,

Fig. 4 is a diagram illustrating a second sensory space of a second body,

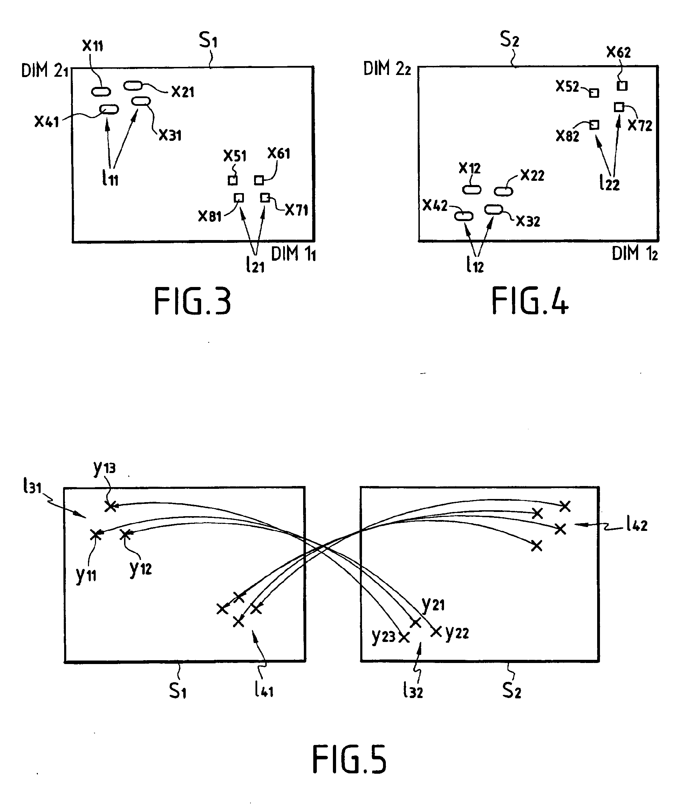

Fig. is a diagram illustrating a part of the final mapping relating the first and second sensory spaces of Fig. 3 and Fig. 4, and

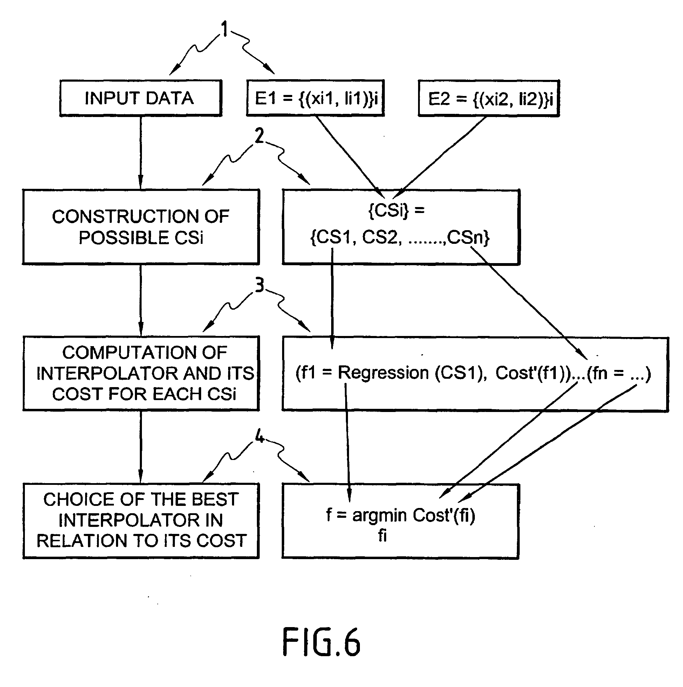

Fig. 6 is a flow diagram illustrating an example of a strategy for finding a mapping relating the first and second sensory spaces of Fig. 3 and Fig. 4.

## DETAILED DESCRIPTION OF THE PREFERRED EMBODIMENTS

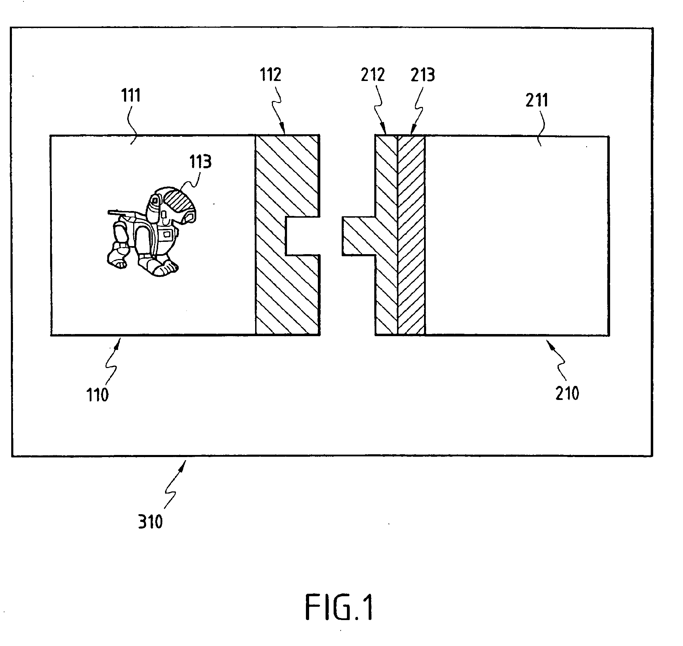

The main components of an autonomous system according to the present invention will be described in connection with Fig. 1.

A body 110 comprises the two following sub-components :

(1) A body implementation 111 comprising a set of software and/or hardware elements implementing the body's sensor or sensors and possible actuators.

(2) A body interface 112 comprising a standardized or common software interface to access the body's sensors and actuators.

A software agent 210 constituting a software artificial mind comprises the three following sub-components :

(1) A software agent implementation 211 comprising a set of software elements implementing a control system.

(2) A software agent interface 212 comprising a standardized or common software interface to convert the command and the sensor requests sent by the software agent implementation 211 into a format that can be understood by a body interface 112.

(3) A specific layer of software 213 defining a sensory space morpher to enable the software agent 210 to find correspondences between values perceived when embodied into different bodies.

A software agent or software artificial mind 210 can dock on a body 110 and access information coming from a sensor 113 of the body 110 and control possible actuators included in the body 110. The entity constituted by a body 110 and a software agent 210 is called an embodied agent 310.

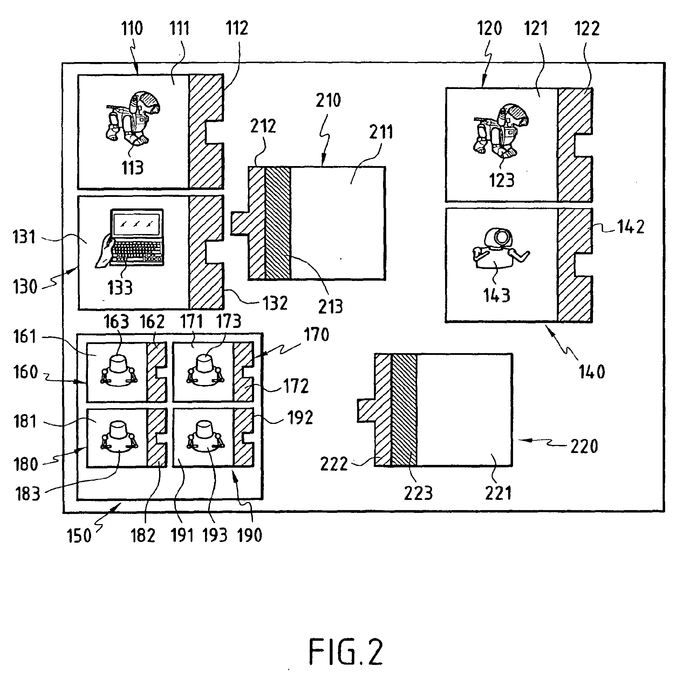

The software agent 210 accesses the body 110 via the standardized interface 112,212. No assumption is made on whether the body is a software entity like the body 140 of virtual characters in computer games (Fig. 2) or a physical entity like the robot 110 of Fig. 1 and Fig. 2.

The software agent interface 212 and the body interface 112 need to be compatible in the way the information is presented and requested. For example, the sensor may be presented as a vector of integer values.

Since a software agent can dock successively in different bodies, different embodied agents can thus be created successively.

The specific layer of software 213 constituting a sensory space morpher can be used by a software agent such as 210 with learning capabilities in which the knowledge learned in one body such as 110 needs to be reused in another one such as 120,130,140 (Fig. 2).

For the specific layer of software 213 to be efficient, it is necessary that two pieces of information or more perceived in two different bodies are attached to a common label, for instance a word, and that some kind of correlation exists between these two pieces of information. A correlation may thus exist for instance if the two pieces of information are perceived with two different cameras using different color filters.

Examples of different body types will be given with respect to Fig. 2.

The body may be a physical body constituted by a robot, such as a robotic pet. Such a robotic pet may be constituted for example by the dog-shaped miniature AIBO robot, made by Sony Corporation and illustrated on Fig. 2 as the bodies 110,120, each comprising a body implementation 111,121 with a sensor 113,123, such as a camera, and a compatible body interface 112,122.

In a particular example, an AIBO physical robot is controlled via a wireless link.

A software module using this link can transmit commands that instruct the robot to perform actions, or to return images or sensor values. In addition, a speech recognition component is based on a toolkit provided on the host computer and a segmentation unit performs simple segmentation on the images returned by the robot. It may be noted that the controlling code remains identical whether the robot is controlled via the wireless link (which uses TCP/IP) or over a direct serial connection and the details of the communications means do not affect the process of docketing a software agent into such a body.

In the context of learning names for objects perceived visually, only the part of the sensory space associated with the object perception is considered. An image taken by the robot's camera is first segmented using a color detection algorithm. In this operation, the robot tries to separate the object in the scene from the background.

A standard growing region algorithm can be used. Pixels are grouped into regions of similar colors. Then the regions are filtered in order to suppress too small and too large regions. The remaining regions constitute segments.

Because the robot's camera has not a very wide view angle, only one object is generally in view. If several objects are segmented, one segment is chosen at random. The robot will consider this segment as the subject of the interaction.

Once a segment has been selected, it is analyzed using a set of sensory channels corresponding to color and shape properties (redness, blueness, yellowness, greenness, brightness, height, width, rectangularity). The system is using the opponent channels Yellow-Blue and Green-Red instead of the standard Red-Green-Blue color decomposition. This system has been shown to be closer to human color perception. Using these sensory channels, the robot builds up a simplified representation of the perceived object, which can be summarized in a vector such as the following :

RED:0.8
GREEN: 0.0
YELLOW: 0.2
BLUE: 0.0
BRIGHTNESS: 0.4
HEIGHT: 0.5
WIDTH: 0.6
RECTANGULARITY: 0.6

A physically embodied agent, such as the embodied agent 310 of Fig. 1 comprising a robot as a physical body 110 can interact with humans as well as with other physically embodied agents and also with virtual bodies.

As another example of physical body, Fig. 2 shows with the reference numeral 130 a laptop computer with a built-in camera 133, such as for example the VAIO laptop computer of Sony Corporation known under reference PCG-C1XN.

Such a body 130 comprises the common body interface 132 compatible with the agent software interface 212, and a body supporting structure 131 including the camera 133. The body 130 has much less sensors and actuators than an AIBO robot but can also be a potential body on which a software agent 210 can dock.

Because of the differences between the robot camera 113 such as an AIBO camera and the camera 133, such as a VAIO camera, the values perceived by both cameras are different and there is some need to relate the sensory spaces for object recognition for both cameras.

The invention also applies to virtual bodies such as the video game 140 illustrated on Fig. 2. Such a virtual body comprises a software body supporting structure 141 as well as a common body software interface 142. The virtual body 140 can be for instance a virtual character in a computer game that would follow the player character in its adventures. The virtual body 140 can be seen as a set of sensors 143 and actuators. As no physical perception is involved, the sensory space of such a body 140 can be simpler and less noisy than the one considered previously with respect to a physical body. Nevertheless the sensory space of a virtual body 140 will still be defined as a vector summarizing the perceived object.

For example such a vector may be as follows :

RED: 0.2
GREEN: 0.4
BLUE: 0.9
HEIGHT: 0.2
WIDTH: 0.5
RECTANGULARITY: 0.2

The same way that interactions between physically embodied agents are possible, several virtual bodies can meet and interact in a virtual place.

An example of a system involving several physical and virtual bodies 110,120,130,140,150, two software agents 210,220 and two users will now be described with reference to Fig. 2. In practice, the number of bodies, software agents and users may naturally be much higher.

A robot body 110, such as the previously mentioned AIBO body is located in the apartment of a first User. Such a body 110 can receive one software agent at a time, such as the software agent 210.

Another robot body 120, which may be similar to the previously mentioned AIBO body is located in the apartment of a second User. Such a body 120 can also receive one software agent at a time, such as the software agent 220 which comprises a software agent implementation 221, a software agent interface 222 and a specific layer of software 223 as the previously described software agent 210.

Another physical body is constituted by a portable personal computer 130, such as a notebook equipped with a camera 133 and carried by the first User. This body 130 has also the capacity of receiving one software agent at a time, such as the software agent 210.

A virtual body 140 is defined by an adventure video game the second User plays regularly. Such a virtual body 140 has also the capacity of receiving one software agent at a time such, as the software agent 220.

Reference 150 designates a virtual meeting place with several virtual bodies 160, 170, 180, 190 where software agents 210,220 can meet and interact. The virtual meeting place 150 has the capacity of receiving several software agents at a time, e. g. four software agents in the example illustrated on Fig.2. The virtual bodies each comprise a software body supporting structure 161,171,181,191 implementing sensor means 163,173,183,193 and a common body software interface 162,172,182,192.

The system according to the present invention improves the interactions between human users and software agents. Indeed, in order to develop an interesting relationship with an entertainment robot, a user should be able to share parts of his daily life with it. One way of doing so is to engage in linguistic communication with the robot so that it learns about the world of its owner. But most of the time, it is not convenient for the owner to take the robot with him. Since the software agent of an entertainment robot can get out of its normal body, follow its owner on another body, experience new environments and come back into its normal body, this should lead more rapidly to a rich and varied behavior, making the robot more interesting.

For example, the first User teaches regularly new words to his AIBO 110. This robot now knows how to name most of the objects of its environment. The first

User will not take the AIBO body with him, since he may consider it difficult to travel with a robotic dog. However, the software artificial mind, i.e. the software agent inside the AIBO can easily be transferred to a lighter body, for instance the notebook 130 with the camera 133. During the journey, the software agent 210 will learn new words for new situations. For instance, the user might show a painting in a museum and have the agent learn a word for it. Back home, the agent 210 returns to its normal robotic body 110, but it has remembered all the things its owner taught it during the holidays. If its owner shows a postcard of the painting to the robot, it will name it correctly.

The second User is also teaching to his AIBO 120 words to name objects of his environment. However, the second User likes to play video games very much. It is thus possible for the second User to use the method according to the present invention and to build games in which the software agent of the robot can follow its owner in their virtual adventures. At first, a short training period occurs, during which a small number of elements known in the real world will be learned in the virtual one. This allows the mapping between the real world and the virtual world to be established.

Then, when the software agent 220 learns new words for new situations in the virtual world, it can potentially reuse this knowledge in the real world and vice versa. For example, after having been scared by a red dragon in the game 140, the software agent may also be scared of its red ball when embodied in an AIBO robot body 120.

Software agents 210,220 may also get out of their entertainment robots to interact between them in virtual worlds such as in a virtual meeting place 150 where the agents can share their knowledge about the world. The software agents will thus learn both by interacting with human beings in a grounded manner and by interacting with one another, in both grounded and non-grounded situations.

Two software agents 210,220 meeting in the real or a virtual world can thus exchange the lessons that they have learned from their owners while incorporated in a robot body 110,120. A virtual robot park 150 can thus be used to create meetings between software agents 210,220.

When the owner of a robot stops using it, he can put the robot on its "Internet plug". Thus during the night, the software agent 220 previously docked in the robot body 120 teleports to the virtual robot park 150 where it meets other software agents such as 210 embodied in virtual robots and interacts with them.

By doing this, the software agent 220 can learn new words or new facts about the world. In the morning, the software agent 220 which is embodied again in its robot body 120 can surprise its owner with the new things it learned during the night. As the software agents 210,220 of the first and second Users know different things, their interaction in the virtual meeting place 150 can really be fruitful.

The function of the specific layer of software 213,223 or sensory space morpher of software agents 210,220 will now be described in a more detailed manner referring to Fig. 3 to 6.

The sensory space of an agent depends on the physical body in which it is embodied. If a software agent that has started to learn a vocabulary in one body is transferred in a new physical body of a different kind, it will not be able to reuse the knowledge acquired and to continue to recognize objects unless it comprises a sensory space morpher 213,223 constituted by a specific layer of software enabling to find correspondences between values of infionnation perceived by the software agent when embodied into different bodies.

Indeed, the new sensory space may differ in significant ways from the old one :

1. Sensors could be of different kinds, e.g. color camera/infra-red camera/smell/touch.
2. Sensors may be of the same type but either (1) the correspondence between the sensory channels defining the space is unknown (e.g. a vision system might include three channels representing red, green and blue, but their order of presentation might differ from the other body) or (2) they might encode information in a different way (e.g. for a color camera, colors might be encoded using RGB, HSV, HLS, opponent channels or anyone of a number of alternative encodings)
3. Sensors may be of the same type, and the sensory channels may be known exactly, but due to differences in the hardware implementation, the vectors cannot be reused. This is the case for an AIBO robot to an EVI-D31 notebook transfer : the images grabbed from an EVI camera and an AIBO camera differ considerably in terms of color.

For this reason the vectors learned previously may not be directly reusable.

The invention presents a general solution to this problem and exhibits a particular algorithm to implement it.

Briefly, this solution proceeds in the following manner :

Teach a small set of words in the new body that are already known in the former one,

(1) Using word to sensory space correspondences, find a mapping $f$ and a reverse mapping $f^{1}$ relating the two sensory spaces
(2) Use this mapping to directly generate word to sensory spaces correspondences in new body from existing ones in the former body.

This process can be performed again in both directions as new learning occurs.

The problem and its solution will now be explained in a more general manner :

Let B1 and B2 be two bodies, and S1 and S2 the associated sensory spaces isomorphic to $R^{n}$ , i.e. in each sensory space each point is defined by a n-dimensional real vector. An initial knowledge E1, E2 was acquired in each body. This knowledge consists of a set of prototype points xi1, xi2 to which is associated a label li1, li2. This label designates a class of prototype points. Let L be the set of all labels. The input data defining the initial knowledge (step 1 of Fig. 6) are as follows :
In B1, knowledge is represented by E1={(xi in S1, lil in L)}i
In B2, knowledge is represented by E2 = {(xi2 in S2, li2 in L)} i

It is also given a method for assigning labels to points which have not yet received a label. Whatever techniques are used, this assignment is done with a certain uncertainty.

This can be formalized by saying that for each body it is given a function di (i=1,2) that associates to a point in Si (i=1,2) a label in L and an associated confidence between 0 and 1 :

$$d1: S1 \rightarrow Lx(0,1)$$

$$d2: S2 \rightarrow Lx(0,1)$$

One example of such a function can be built using a nearest-neighbor algorithm.

Let yi 1 in S 1 be a point which has not yet received a label. Let xi 1 be the closest labeled-point in S1.yi 1 can receive the label of xi 1 as it is specified in E1. The confidence of such an association can be a function of the distance *dist* separating yi I from xi1, for instance exp(-*dist*^2).

Other more efficient methods can be envisaged, for example using a k-nearest-neighbor algorithm. As the knowledge in Ei increases (new associations being learned), the confidence in the assignments obtained using di functions increases.

According to the invention, in order to reuse knowledge learned in B1 for assigning labels in B2, the method includes a step of finding a mapping $f$: S1->S2 and a reverse mapping $f^1$: S2->S1.

The strategy for doing this may be as follows :

A mapping should be searched that allows as well as possible to compute the representation $X_{n2}$ in S2 of objects that are perceived $X_{01}$ in S1. Additionally should be continuous and relatively smooth.

This problem may be changed into several classical regression problems.

In a classical regression problem, a correspondences set which is a set of points CS1= $\{(x_{i1}, tx_{i1})\}$, where $tx_{1I}$ is the desired image point of $x_{i1}$ is given in input. The function $f$ can in this case be computed by a classical regression algorithm: $f$=Regression $\{(x_{i1}, tx_{i1})\}$i.

But the present problem is not a classical regression problem because no correspondences set is initially given. We are given only E1 and E2. We do not have a one to one correspondence between points in S 1 and S2, but only indications that certain points in S1 (e.g. $X_{1I}$, $X_{2I}$, $X_{3I}$, $X_{4I}$ or $X_{5I}$, $X_{6I}$, $X_{7I}$, $X_{8I}$) have the same label in S2 (e.g. $I_{1I}$=$W_1$ or $I_{2I}$=$W_2$) than certain points in S2 (e.g. $X_{12}$, $X_{22}$, $X_{32}$, $X_{42}$ or $X_{52}$, $X_{62}$, $X_{72}$, $X_{82}$ having respectively the labels $I_{12}$=$W_1$ or $I_{22}$=$W_2$) (Figs. 3 and 4).

Given E1 and E2, we can generate a correspondences set as a set of {xil, xj2} associations where xi 1 and xj2 which are points in S1 and S2 respectively have the same label. The idea is to generate all the possible correspondences sets CSi that we will note {CSi} and for each of them compute the associated regression function $fi$ (step 2 of Fig. 6). The method may be achieved even with a small number of CSis (e.g. with five words known in both sensory spaces S1, S2).

The CSi can be defined in formal way as follows:

$$\text{Let } L_{inter} = \{li \text{ / It exists } (x_{i1}, li) \text{ in } E1 \text{ and } (x_{i2}, li) \text{ in } E2\}$$

and let the consistency property (P) be defined as
CSi verifies (P) if:

$$CSi = \{(x_{i1}, x_{i2})\}_1 \text{ xil in S1 and xi2 in S2}$$

whatever xi1 it exists $(x_{i1}, li)$ in E1 and whatever xi2 it exists $(x_{i2}, 1'1)$ in E2 and li = l'i in $L_{inter}$

Furthermore
whatever $(x_{iI}, x_{i2})$ in CSi and $(x_{i1}, x_{j2})$ in CSi, then xi1 different from xj 1 and xi2 different from xj2.

Then {CSi} is the set of all CSi that verify (P).

The best function obtained by the regressions is then evaluated.

Several $fi$, one for each CSi, have been computed using a classical regression algorithm. The best one from this set should now be chosen.

A way of evaluating the smoothness of a function *fi* is to apply a Cost function such as:

$$COST(fi) = SUM_{(x1, x2) \, in \, CS_{12}} (|f(x_{11}) - x_{12}|^2) + Lambda \, INTEGRAL \, |Df|^2 dx_{11}$$

where D is some differential operator and Lambda is a parameter that indicates the weight of the smoothness cost. This formula is typically used and justified by the theory of regularization and used as the cost to be minimized in regression problems (step 3 of Fig. 6).

The function *fi* with the minimal Cost is chosen as the mapping *f* (step 4 of Fig. 6).

In order to compute $f^1$: S2->S1 the inverse mapping of *f*, the same method is used changing the destination set with the initial set.

A mapping may be used as follows to assign labels:

The software agent is in body 2. It gets the perception xn2 in S2 of an object o.

It can assign a label to it with the following method:

Using d2 a first label 12 is obtained with a confidence level conf2:

$$d2(xn2) = (l2, conf2)$$

Using d1 and the image of xn2 by the mapping $f^1$ a second label 11 with a confidence level conf1:

$$d1(f^{-1}(xn2)) = (l1, conf1)$$

If 11 =12, the common label is chosen.

If 11 is different from 12, the one with the highest confidence level is chosen :

If conf1>conf2 then 11 else 12.

Fig. 5 shows a part of one example of a final mapping relating S 1 and S2 with labels $l_{31}$ and $L_{41}$ in S1 and labels $l_{32}$ and $l_{42}$ in S2 and correspondences e.g. between a set of points $y_{21}$, $y_{22}$, $y_{23}$ in S2 and a set of points $Y_{11}$, $Y_{12}$, $Y_{13}$ in S1.

Thus, once the mapping *f* and reverse mapping $f^1$ have been found, a software agent can learn e.g. a word in just one sensory space and be able to use it in both sensory spaces as illustrated on Fig. 5.

**Claims**

1.  An autonomous system comprising :

    a) a plurality of bodies (110,120,130,140,150) of different kinds, each body (110,120,130,140,150) comprising:

    i) a body supporting structure (111,121,131,141,161,171,181,191) having at least one sensor (113,123,133,143,163,173,183,193) defining a sensory space (S1,S2), and
    ii) a body interface (112,122,132,142,162,172,182,192) constituted by a common body software interface to access information originating from the body supporting structure (111,121,131,141,161,171,171,191), and

    b) at least a software agent (210,220) comprising:

    i)a set of agent software elements (211,221) and
    ii) an agent interface (212,222) constituted by a common agent software interface to convert sensor requests sent by the set of agent software elements (211,221) into a format that can be understood by the body interface,

wherein said software agent (e.g. 210) constituting a software artificial mind is adapted to dock successively on different bodies (110,120,130,140,150) to define with the successive bodies successive embodied agents (310), the software agent (e.g. 210) accessing information coming from the sensor (e.g. 113) implemented on the body supporting structure (e.g. 111) of a given body (e.g. 110), via the body interface (e.g. 112) of said given body (e.g. 110) and the agent interface (e.g. 212) and the software agent (e.g. 210) including a specific layer of software (e.g. 213) enabling to find correspondences between values of information perceived by the software agent (e.g. 210) when embodied into different bodies (110,120,130,140,150).

2. An autonomous system according to claim 1, wherein at least one body is a physical entity (110, 120, 130).

3. An autonomous system according to claim 2, wherein at least one body is a robot (110,120)

4. An autonomous system according to claim 2, wherein at least one body is a note book or laptop computer (130) equipped with a video camera (133).

5. An autonomous system according to anyone of claims 1 to 4, wherein at least one body is a software entity (140).

6. An autonomous system according to claim 5, wherein at least one body is a virtual character in a computer game.

7. An autonomous system according to claim 1, wherein at least one body is a virtual robot park (150) adapted to cooperate simultaneously with a plurality of software agents (210,220).

8. An autonomous system according to anyone of claims 1 to 7, wherein the specific layer of software (213) of the software agent (210) comprises means for using common labels (li1,li2) associated with values perceived by the software agent (210) in sensory spaces (Si1,Si2) of different bodies (e.g. 110,130).

9. An autonomous system according to anyone of claims 1 to 8, wherein the specific layer of software (213) of the software agent (210) cooperating successively with a first body (110) and a second body (130) comprises the following means :

i) means for storing a first knowledge (E1) acquired in the first body (110) and comprising at least a first label (li1) associated with a first set of first prototype points (xi1) of a first sensory space (S 1) associated with the first body (110),
ii) means for storing a second knowledge (E2) acquired in the second body (130) and comprising at least said first label (li1) associated with a first set of second prototype points (xi2) of a second sensory space (S2) associated with the second body (130),
iii) means for establishing a mapping $(f)$ and a reverse mapping $(f^1)$ relating the first and second sensory spaces (S1, S2), and
iv) means for using the reverse mapping $(f^1)$ for directly finding labels associated to further sets of second prototype points (yi2) in the second body from existing further sets of first prototype points (yi1) in the first body.

**Patentansprüche**

1. Autonomes System, das aufweist:

a) eine Mehrzahl von Körpern (110, 120, 130, 140, 150) unterschiedlicher Art, wobei jeder Körper (110, 120, 130, 140, 150) aufweist:

i) eine Körpertragstmktur (111, 121, 131, 141, 151, 161, 171, 181, 191) mit wenigstens einem Sensor (113, 123, 133, 143, 153, 163, 173, 183, 193), der einen Sensorraum (S1, S2) definiert, und
ii) ein von einem gemeinsamen Körper-Software-Interface gebildetes Körper-Interface (112, 122, 132, 142, 152, 162, 172, 182, 192) für den Zugriff auf Informationen, die ihren Ursprung in der Körpertragstruktur (111, 121, 131, 141, 151, 161, 171, 181, 191) haben, und

b) wenigstens einen Softwareagenten (210, 220), der aufweist:

i) einen Satz von Agenten-Softwareelementen (211, 221) und

ii) ein aus einem Agenten-Software-Interface gebildetes Agenten-Interface (212, 222) zur Umwandlung von Sensor-Anforderungen, die von dem Satz von Agenten-Softwareelementen (211, 221) gesendet werden, in ein Format, das von dem Körper-Interface verstanden werden kann,

wobei der Softwareagent (z.B. 210), der eine künstliche Software-Intelligenz bildet, adaptiert ist, um sukzessiv an verschiedene Körper (110, 120, 130, 140, 150) anzudocken, um mit den sukzessiven Körpern sukzessive eingegliederte Agenten (310) zu definieren,
wobei der Softwareagent (z.B. 210) auf Informationen zugreift, die über das Körper-Interface (z.B. 112) eines gegebenen Körpers (z.B. 110) und das Agenten-Interface (z.B. 212) von dem Sensor (z.B. 113) kommen, der an der Körpertragstruktur (z.B. 111) des gegebenen Körpers (z.B. 110) implementiert ist, und wobei der Softwareagent (z.B. 210) eine spezifische Softwareschicht (z.B.213) enthält, die in die Lage versetzt, Korrespondenzen zwischen von dem Softwareagenten (z.B. 210) wahrgenommenen Informationswerten zu ermitteln, wenn dieser in verschiedene Körpern (110, 120, 130, 140, 150) eingegliedert ist.

2. Autonomes System nach Anspruch 1, bei dem wenigstens ein Körper eine physikalische Entität (110, 120, 130) ist.

3. Autonomes System nach Anspruch 2, bei dem wenigstens ein Körper ein Roboter (110, 120) ist.

4. Autonomes System nach Anspruch 2, bei dem wenigstens ein Körper ein Notebook oder ein Laptop-Computer (130) ist, die mit einer Videokamera (133) ausgestattet sind.

5. Autonomes System nach einem der Ansprüche 1 bis 4, bei dem wenigstens ein Körper eine Software-Entität (140) ist.

6. Autonomes System nach Anspruch 5, bei dem wenigstens ein Körper eine virtuelle Spielfigur in einem Computerspiel ist.

7. Autonomes System nach Anspruch 1, bei dem wenigstens ein Körper ein virtueller Roboterpark (150) ist, der adaptiert ist, um gleichzeitig mit einer Mehrzahl von Softwareagenten (210, 220) zu kooperieren.

8. Autonomes System nach einem der Ansprüche 1 bis 7, bei dem die spezifische Softwareschicht (213) des Softwareagenten (210) Mittel aufweist, um gemeinsame Labels (Li1, Li2) zu benutzen, die mit Werten verknüpft sind, die von dem Softwareagenten (210) in Sensorräumen (Si1, Si2) verschiedener Körper (z.B. 110, 130) wahrgenommen werden.

9. Autonomes System nach einem der Ansprüche 1 bis 8, bei dem die spezifische Softwareschicht (213) des Softwareagenten (210), der sukzessiv mit einem ersten Körper (110) und einem zweiten Körper (130) kooperiert, die folgenden Mittel aufweist:

i) Mittel zum Speichern eines ersten Wissens (E1), das in dem ersten Körper (110) alcquiriert wird und wenigstens ein erstes Label (li1) umfaßt, das mit einem ersten Satz von ersten Prototyppunkten (xi1) eines mit dem ersten Körper (110) verknüpften ersten Sensorraums (S1) verknüpft ist,
ii) Mittel zum Speichern eines zweiten Wissens (E2), das in dem zweiten Körper (130) akquiriert wird und wenigstens das erste Label (li1) umfaßt, das mit einem ersten Satz von zweiten Prototyppunkten (xi2) eines mit dem zweiten Körper (130) verknüpften zweiten Sensorraums (S2) verknüpft ist,
iii) Mittel zum Einrichten einer Abbildung (f) und einer inversen Abbildung (f$^{-1}$), die den ersten und den zweiten Sensorraum (S1, S2) in Zusammenhang bringen, und
iv) Mittel zum Benutzen der inversen Abbildung (f$^1$) für das direkte Auffinden von mit weiteren Sätzen von zweiten Prototyppunkten (yi2) in dem zweiten Körper verknüpften Labels aus existierenden weiteren Sätzen von ersten Prototyppunkten (yi1) in dem ersten Körper.

**Revendications**

1. Système autonome comprenant :

a) une pluralité de corps (110, 120, 130, 140, 150) de différents types, chaque corps (110, 120, 130, 140, 150) comprenant :

i) un corps supportant une structure (111, 121, 131, 141, 161, 171, 181, 191) ayant au moins un capteur (113, 123, 133, 143, 163, 173, 183, 193) définissant un espace sensoriel (S1, S2), et

ii) une interface de corps (112, 122, 132, 142, 162, 172, 182, 192) constituée d'une interface logicielle de corps commune pour accéder à des informations ayant pour origine la structure de support de corps (111, 121, 131, 141, 161, 171, 181, 191), et

b) au moins un agent logiciel (210, 220) comprenant :

i) un ensemble d'éléments logiciels d'agents (211, 221), et

ii) une interface d'agent (212, 222) constituée d'une interface logicielle d'agent commune pour convertir les demandes de capteurs émises par l'ensemble d'éléments logiciels d'agents (211, 221) sous un format qui peut être compris par l'interface de corps,

dans lequel ledit agent logiciel (par exemple 210) constituant une intelligence artificielle logicielle est conçu pour être logé successivement sur des corps différents (110, 120, 130, 140, 150) pour définir avec les corps successifs des agents incorporés successifs (310), l'agent logiciel (par exemple 210) accédant à des informations provenant du capteur (par exemple 113) mises en oeuvre sur la structure de support de corps (par exemple 111) d'un corps donné (par exemple 110), par l'intermédiaire de l'interface de corps (par exemple 112) dudit corps donné (par exemple 110) et l'interface d'agent (par exemple 212) et l'agent logiciel (par exemple 210) comprenant une couche spécifique de logiciel (par exemple 213) permettant de trouver des correspondances entre des valeurs d'informations perçues par l'agent logiciel (par exemple 210) lorsqu'il est incorporé dans des corps différents (110, 120, 130, 140, 150).

2.  Système autonome selon la revendication 1, dans lequel au moins un corps constitue une entité physique (110, 120, 130).

3.  Système autonome selon la revendication 1, dans lequel au moins un corps est un robot (110, 120).

4.  Système autonome selon la revendication 2, dans lequel au moins un corps est un ordinateur bloc-notes ou portable (130) équipé d'une caméra vidéo (133).

5.  Système autonome selon l'une quelconque des revendications 1 à 4, dans lequel au moins un corps est une entité logicielle (140).

6.  Système autonome selon la revendication 5, dans lequel au moins un corps est un personnage virtuel dans un jeu informatique.

7.  Système autonome selon la revendication 1, dans lequel au moins un corps est un parc de robots virtuels (150) conçus pour coopérer simultanément avec une pluralité d'agents logiciels (210, 220).

8.  Système autonome selon l'une quelconque des revendications 1 à 7, dans lequel la couche spécifique de logiciel (213) de l'agent logiciel (210) comprend un moyen destiné à utiliser des étiquettes communes (li1, li2) associées à des valeurs perçues par l'agent logiciel (210) dans des espaces sensoriels (Si1, Si2) des différents corps (par exemple 110, 130).

9.  Système autonome selon l'une quelconque des revendications 1 à 8, dans lequel la couche spécifique de logiciel (213) de l'agent logiciel (210) coopérant successivement avec un premier corps (110) et un second corps (130) comprend les moyens suivants :

i) un moyen destiné à mémoriser une première connaissance (E1) acquise dans le premier corps (110) et comprenant au moins une première étiquette (li1) associée à un premier ensemble de premiers points prototypes (xi1) d'un premier espace sensoriel (S1) associé au premier corps (110),

ii) un moyen destiné à mémoriser une seconde connaissance (E2) acquise dans le second corps (130) et comprenant au moins ladite première étiquette (li1) associée à un premier ensemble de seconds points prototypes (xi2) d'un second espace sensoriel (S2) associé au second corps (130),

iii) un moyen destiné à établir un mappage (f) et un mappage inverse ($f^{-1}$) se rapportant aux premier et second espaces sensoriels (S1, S2), et

iv) un moyen destiné à utiliser le mappage inverse ($f^{-1}$) pour trouver directement des étiquettes associées à d'autres ensembles de seconds points prototypes (yi2) du second corps à partir d'autres ensembles existants des premiers points prototypes (yi1) dans le premier corps.

FIG.1

FIG.2

FIG.3

FIG.4

FIG.5

FIG.6